# EUROPÄISCHE PATENTSCHRIFT

(11) **EP 2 116 750 B1**
(45) Veröffentlichungstag und Bekanntmachung des Hinweises auf die Patenterteilung: **11.03.2015**
(21) Anmeldenummer: 09000979.6
(22) Anmeldetag: 23.01.2009
(51) Int. Cl.: F16L 9/08, F16L 21/03

(54) **Kanalsystem mit Prüfvorrichtung**
Duct system with control device
Système de canal doté d'un dispositif de contrôle

(30) Priorität: 05.05.2008 DE 202008006134 U
(43) Veröffentlichungstag der Anmeldung: 11.11.2009
(73) Patentinhaber: Gebr. Fasel Betonwerk GmbH, 56472 Nisterau (DE)
(72) Erfinder: Fasel, Stefan, 56472 Nisterau (DE)
(74) Vertreter: Zinnecker, Armin

(56) Entgegenhaltungen:
- EP-A- 1 571 382
- DE-A1- 19 601 652

## Beschreibung

Die Erfindung betrifft ein Kanalsystem nach dem an sich bekannten Oberbegriff des Anspruchs 1.

Es sind sowohl Rohre aus Beton wie auch aus Kunststoff bekannt. Im zweiten Fall werden sie hauptsächlich aus Kunststoff gezogen, während die aus Beton gefertigten Rohre in einer an sich bekannten, aufrecht stehenden Form mit einem verschiebbaren Kern hergestellt werden.

Diese Rohre, die zum Großteil bei Entwässerungssystemen verwendet werden, unterliegen im Rahmen des Umweltschutzes immer höheren Anforderungen, die den heutigen Bedürfnissen kaum mehr gerecht werden. Dies liegt vor allem daran, dass sie unter immer aggressiverem und stark säurehaltigem Abwasser schneller korrodieren und dadurch undicht bzw. zerstört werden. Derartige Korrosionen machen aber auch einen ständigen Austausch und schließlich eine Nachverlegung neuer Rohre öfters nötig als dies noch bis vor wenigen Jahren erforderlich war. Um diese Nachteile zu vermeiden, wurde es bereits bekannt, Betonrohre in Verbindung mit einem Kunststoffrohr herzustellen. Da diese Rohre in üblicher Weise wie Betonrohre jeweils mit ihrem in einem Spitz endenden Teil im nächstfolgenden muffenförmig breiten Rohrende eingeschoben starr verbunden werden, gehen diese Spitzenden leicht zu Bruch.

Aus der DE 81 32 729 U1 ist bereits ein Betonrohr mit einer aus einem Kunststoffrohr bestehenden korrosionsfesten Innenauskleidung bekannt, dessen eines Ende als Rohrspitz-Endteil und dessen anderes Ende als Rohrmuffen-Endteil zur Aufnahme eines Rohrspitz-Endteils des folgenden Rohres ausgebildet ist, wobei am Rohrspitz-Endteil das Kunststoffrohr um einen Überstand übersteht, wobei zwischen dem stirnseitigen Ende des Rohrmuffen-Endteils und einem in das Rohrinnere einspringenden rundumlaufenden Absatz an der Rohrinnenseite des Kunststoffrohres eine rundum laufende Ausnutung zur Aufnahme eines elastomeren Dichtungsringes angeordnet ist, wobei der gerade verlaufende, in den Rohrmuffen-Endteil einsteckbare Überstand so lang ist, dass er die umlaufende Ausnutung mit ihrem Dichtungsring überdeckt und wobei das Rohr aus Beton das Kunststoffrohr bis zum einschiebbaren Überstand des Rohrspitz-Endteils überdeckt, wobei der in das Rohrinnere einspringende rundum laufende Absatz des innenliegenden Kunststoffrohres abgeschrägt ist.

Aus der DE 88 06 158 U1 ist ein Rohr aus Beton mit einer korrosionsfesten Innenauskleidung aus Kunststoff bekannt, bei welchem eine verbundfeste Vereinigung zwischen dem Betonmantel und der Kunststoffauskleidung erfolgt. Dies kann aufgrund der unterschiedlichen Wärmeausdehnungskoeffizienten der Materialien im praktischen Einsatz zur spannungsbedingten Zerstörung führen.

Schließlich ist auch aus der EP 202 426 147 B1 ein Rohr aus Beton bekannt. Bei diesem Betonrohr wird bereits das aus Kunststoff bestehende Rohrspitz-Endteil durch eine Dichtung gegenüber dem ebenfalls aus Kunststoff bestehenden Rohrinnenteil des benachbarten Rohres abgedichtet. Weiterhin ist zwischen den nur aus Beton bestehenden Rohrmuffen-Endteilen und dem Betonrohrspitzen-Endteil des benachbarten Rohres eine rundum laufende, ringförmige Dichtung aus flexiblem Material angeordnet. Diese Rohre haben sich als korrosionsfeste Rohre seit einigen Jahren aufgrund ihrer augenscheinlichen Vorteile etablieren können. Allerdings ist bei diesen Rohren festzustellen, dass sie nach dem Verlegen der obligatorischen Luftdruckprüfung nicht mehr Stand halten. Das bedeutet, dass im Bereich der Rohrübergänge undichte Stellen auftreten können, durch die die eingepumpte Druckluft entweichen kann.

In der nicht vorveröffentlichten deutschen GebrauchsmusteranmeldungDE 20 2007 016 602.8 U1ist bereits ein Kanalsystem mit wenigstens zwei Schächten mit doppelt gedichteten Schachtmuffen beschrieben, wobei die Schachtmuffen durch wenigstens ein doppelwandiges, doppelt gedichtetes Kanalrohr verbunden werden und wobei sich zwischen den Schachtmuffen und dem doppelwandigen Kanalrohr ein gemeinsamer ringförmiger Dichtungsraum zwischen den Doppeldichtungen ausbildet. In diesem Kanalsystem ist bereits eine Prüfvorrichtung vorgesehen, wobei die Schächte Verbindungsmittel umfassen, die die Prüfvorrichtung mit dem gemeinsamen Dichtungsraum verbinden. Mit diesem Kanalsystem mit Prüfvorrichtung kann sehr einfach und schnell eine Überprüfung des betreffenden Kanalabschnittes auf seine Dichtigkeit hin vorgenommen werden. Bei diesem vorbekannten System wird der gemeinsame Dichtungsraum, der auch den Raum zwischen Innen- und Außenrohr umfasst, überprüft. Nachteilig bei diesem System ist es aber, dass der gesamte Raum zwischen Innen- und Außenrohr mit dem Prüfmittel ausgefüllt werden muß, um die Dichtigkeitsprüfung durchzuführen.

Aufgabe der vorliegenden Erfindung ist es, ein verbessertes Kanalsystem mit einer vereinfachten Prüfmöglichkeit des Kanalsystems auf seine Dichtigkeit hin bereitzustellen.

Erfindungsgemäß wird die Aufgabe durch die Merkmale des Anspruchs 1 gelöst. Demnach wird ein Kanalsystem vorgeschlagen, das aus wenigstens zwei Schächten besteht, die durch wenigstens ein doppelwandiges, doppelt gedichtetes Kanalrohr verbunden werden, das in an den Schächten ausgebildeten Schachtmuffen einsteckbar ist, so dass sich zwischen den Schachtmuffen und dem doppelwandigen Kanalrohr ein gemeinsamer Dichtungsraum zwischen den Doppeldichtungen ausbildet. Gemäß der vorliegenden Erfindung ist in dem doppelwandigen Kanalrohr, das aus einem Kunststoff-Innenrohr und einem Beton-Außenrohr besteht, ein über seine Länge mitlaufendes Prüfrohr integriert, das im Bereich des jeweiligen Kanalrohrs den Dichtungsraum bildet, und das außen am Kunststoff-Innenrohr entlang verläuft.

Es ergibt sich gemäß der vorliegenden Erfindung daher ein Kanalsystem, in dem zwischen den Schachtmuffen zweier Schächte die doppelwandigen Kanalrohre verlegt sind, wobei bei der Dichtigkeitsprüfung der Dichtungsraum zunächst einmal aus den jeweiligen Prüfrohren der Kanalrohre besteht, die in den Dichtungsraum zwischen den beiden Doppeldichtungen im Muffenbereich der Kanalrohre einmünden. Dieser gemeinsame Dichtungsraum des Gesamtsystems weist ein vergleichsweise geringes Volumen auf und kann in einfacher Weise mit dem Dichtungsmittel abgedrückt werden, so dass zwischen den einzelnen Schächten des Kanalsystems in sehr einfacher Weise die Unversehrtheit des Kanals überprüft werden kann.

Besonders vorteilhaft kann während der Dichtigkeitsprüfung darauf verzichtet werden, den eigentlichen Kanal abzusperren.

Vorteilhafte Ausgestaltungen der Erfindung ergeben sich aus den sich an den Hauptanspruch anschließenden Unteransprüchen.

Demnach kann das Prüfrohr aus einem Kunststoffrohr mit einem Durchmesser bestehen, der wesentlich kleiner ist als der Durchmesser des Kunststoff-Innenrohrs.

Vorteilhaft kann mittels einer Prüfvorrichtung eine Dichtigkeitsprüfung unter Verwendung eines Prüfmediums durchführbar sein. Die Prüfvorrichtung kann einen Anschluß für ein Prüfmedium, ein erstes Absperrmittel, eine Messeinrichtung mit Anzeige, ein zweites Absperrmittel sowie ein Anschlussstück zum Anschluss an das Verbindungsmittel des Schachtes aufweisen.

Vorteilhaft können als Prüfmedium Wasser oder Luft einsetzbar sein. Die Prüfrohre können derart in das Beton-Außenrohr eingegossen sein, dass sie jeweils in den abgedichteten Zwischenraum zwischen einer Rohrmuffe und einem Rohrspitz benachbarter Kanalrohre einmünden. So kann sich das Prüfmedium von einem Prüfrohr über den abgedichteten Bereich im Zwischenraum zwischen einer Rohrmuffe und einem benachbarten Rohrspitz in das nächste Prüfrohr ausdehnen und seinen Weg fortsetzen, bis es zum nächstfolgenden Schacht gelangt.

Besonders vorteilhaft ist auch die Muffe eines Kanalrohrs mit einer Kunststoffschicht ausgekleidet. Durch diese zusätzliche Auskleidung der Muffe wird bei entsprechender Anordnung einer Dichtung zwischen Muffen-Endteil und Rohrspitzen-Endteil des benachbarten Rohres die Dichtigkeit des Rohres soweit sichergestellt, dass hier die Rohrleitung nach Verlegen einer Luftdruckprüfung Stand hält.

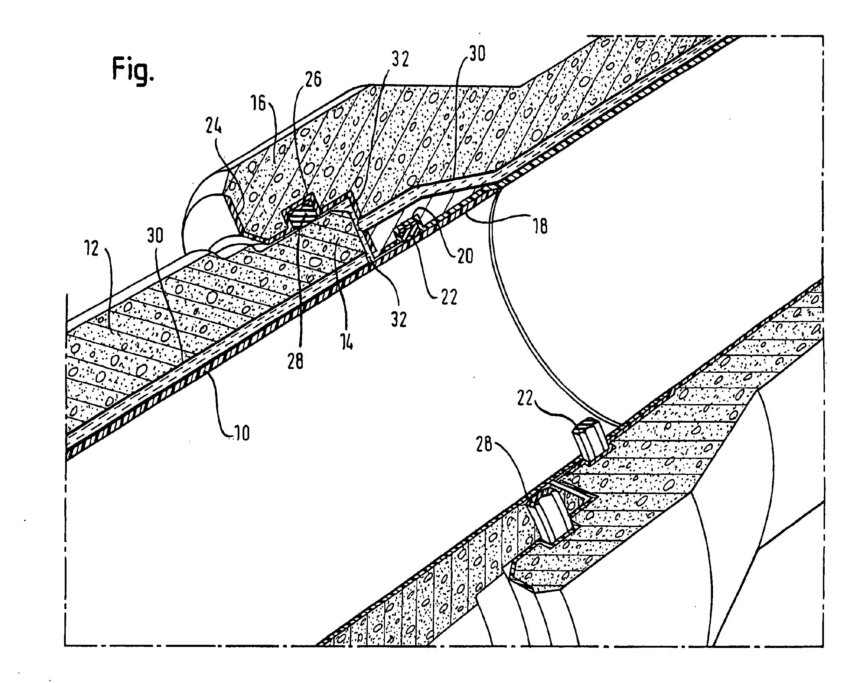

Weitere Merkmale, Einzelheiten und Vorteile der Erfindung werden anhand eines in der Zeichnung dargestellten Ausführungsbeispiels näher erläutert.

Die einzige Figur zeigt eine Teilansicht eines Rohrausschnittes einer Verbindung zweier fertig verlegter Rohre in perspektivischer Darstellung.

In der Figur ist ein Kunststoffrohr 10 gezeigt, das mit einer Betonummantelung 12 versehen ist, wobei das Kunststoffrohr als eine korrosionsfeste, flüssigkeitsdichte Innenauskleidung des Betonrohres 12 dient, von dem ein Ende als Rohrspitz-Endteil 14 und das andere Ende als Rohrmuffen-Endteil 16 ausgebildet ist. Über die Endteile 14 und 16 sind die Kanalrohre miteinander zu einer Rohrleitung verbindbar. Hierbei wird das Rohrspitz-Endteil 14 des einen Kanalrohres in das Rohrmuffen-Endteil 16 des anderen Kanalrohres eingesteckt. Als Justier-und Einsteckhilfe dient hierbei ein Überstand 18 des Kunststoffrohres 10 mit dem dieses am Rohrspitz-Endteil über das Betonrohr bzw. die Betonummantelung 12 übersteht.

Im Rohrmuffen-Endteil 16 ist eine dem Rohrinneren zugewandte rundum laufende Nut 20 vorgesehen, in der eine ringförmige, vorteilhaft flache Dichtung 22 aus einer natürlichen oder synthetischen flexiblen Material, beispielsweise Latex, angebracht ist. Der in den Rohrmuffen-Endteil einsteckbare Überstand 18 ist so lang ausgeführt, dass er die umlaufende Nut 20 mit ihrer Dichtung 22 abdeckt.

Das Kunststoffrohr 10 deckt aber nicht nur die Innenwand des Kanalrohres ab, sondern erstreckt sich auch über den Innenwandbereich des Rohrmuffen-Endteils 16. Auch die äußere Kante 24 des Rohrmuffen-Endteils 16 ist von dem Kunststoffrohr 18 überdeckt.

Im Bereich des Rohrmuffen-Endteils 16 ist im Kunststoffrohr 18 eine weitere Nut 26 ausgebildet, in welcher ebenfalls eine aus natürlichem oder synthetischem flexiblen Material, beispielsweise Latex, bestehende Dichtung 28 einsetzbar ist.

Außen an dem Kunststoffrohr 10 ist ein mitlaufendes Prüfrohr 30 angeordnet, das einen wesentlich kleineren Durchmesser aufweist als das Kunststoffrohr und das in das Betonrohr 12 eingegossen ist. Das Prüfrohr 30 mündet einerseits in dem Rohrspitz-Endteil 14, wie in der Figur dargestellt. Auf der anderen Seite mündet es auch in dem Muffen-Endteil 16, wobei das Prüfrohr 30 hier oberhalb der Nut 20 in den sich an den Stoß der Muffe 16 anschließenden Zwischenraum einmündet. Der Zwischenraum 32 wird einerseits von einem Teil der Muffe 16 und dem eingesteckten Spitzteil 14 des benachbarten Rohres sowie andererseits durch die Dichtungen 22 und 28 gebildet.

Somit ergibt sich hier eine räumliche Verbindung zwischen den Rohren 30 von benachbarten Kanalrohren, die über den Zwischenraum 32 miteinander verbunden werden.

Der Einsatz der erfindungsgemäßen Kanalrohre in einem Kanalsystem, welches in seinem Gesamtaufbau im einzelnen in der e.g. DE 20 2007 016 602.8 beschrieben ist, ermöglicht eine einfache Drucküberprüfung einer Rohrleitung zwischen zwei Schächten durch Einleiten eines entsprechenden Druckmittels, beispielsweise von Wasser oder Luft. Das Prüfmedium verteilt sich sehr schnell in den Prüfrohren 30 und den diese miteinander verbindenden Zwischenräumen 32. Somit können die Ringspalte der Muffen schneller mit Wasser oder Luft abgedrückt werden, wodurch bei der Enddichtigkeitsprüfung auf der Baustelle eine enorme Kosteneinsparung erreicht wird.

## Patentansprüche

1. Kanalsystem mit wenigstens zwei Schächten, die durch wenigstens ein doppelwandiges, doppelt gedichtetes Kanalrohr (10, 12) verbunden werden, das in an den Schächten ausgebildeten Schachtmuffen einsteckbar ist, so dass sich zwischen den Schachtmuffen und dem doppelwandigem Kanalrohr (10, 12) ein gemeinsamer Dichtungsraum zwischen den Doppeldichtungen (22, 28) ausbildet, wobei das Kanalrohr (10, 12) ein Kunststoff-Innenrohr (10) und Beton-Außenrohr (12) aufweist,
**dadurch gekennzeichnet,**
**dass** in dem doppelwandigen Kanalrohr (10, 12) ein über seine Länge mitlaufendes Prüfrohr (30) integriert ist, das im Bereich des jeweiligen Kanalrohrs (10, 12) den Dichtungsraum bildet, und dass das Prüfrohr (30) außen am Kunststoff-Innenrohr (10) entlang verläuft.

2. Kanalsystem nach einem der vorhergehenden Ansprüche, **dadurch gekennzeichnet, dass** mittels einer Prüfvorrichtung eine Dichtigkeitsprüfung unter Verwendung eines Prüfmediums durchführbar ist.

3. Kanalsystem nach einem der vorhergehenden Ansprüche, **dadurch gekennzeichnet, dass** die Prüfvorrichtung einen Anschluss für ein Prüfmedium, ein erstes Absperrmittel, eine Messeinrichtung mit Anzeige, ein zweites Absperrmittel sowie ein Anschlussstück zum Anschluss an das Verbindungsmittel des Schachtes aufweist.

4. Kanalsystem nach einem vorhergehenden Ansprüche, **dadurch gekennzeichnet, dass** als Prüfmedium Wasser oder Luft einsetzbar ist.

5. Kanalsystem nach einem vorhergehenden Ansprüche, **dadurch gekennzeichnet, dass** die Prüfrohre (30) derart in das Beton-Außenrohr (12) eingegossen sind, dass sie jeweils in den abgedichteten Zwischenraum zwischen einer Rohrmuffe (16) und einem Rohrspitz (14) benachbarter Kanalrohre (10, 12) einmünden.

6. Kanalsystem nach einem vorhergehenden Ansprüche, **dadurch gekennzeichnet, dass** auch die Muffe (16) eines Kanalrohres (10, 12) mit einer Kunststoffschicht ausgekleidet ist.

## Claims

1. A drainage system having at least two shafts which are connected by at least one double-walled, double-sealed drainage pipe (10, 12) which can be inserted into shaft couplings formed at the shafts such that a common sealing space between the double seals (22, 28) is formed between the shaft couplings and the double-walled drainage pipe (10, 12), wherein the drainage pipe (10, 12) has a plastic inner pipe (10) and a concrete outer pipe (12),
**characterised in that**
an inspection pipe (30) is integrated in the double-walled drainage pipe (10, 12) which runs over the length of the drainage pipe??? and which forms the sealing space in the region of the respective drainage pipe (10, 12); and **in that** the inspection pipe (30) extends outwardly along the plastic inner pipe (10).

2. A drainage system in accordance with one of the preceding claims, **characterised in that** a leak inspection can be carried out by means of a test apparatus using a test medium.

3. A drainage system in accordance with one of the preceding claims, **characterised in that** the test apparatus has a connector for a test medium, a first blocking means, a measuring device with display, a second blocking means and a connector piece for connecting to the connection means of the shaft.

4. A drainage system in accordance with one of the preceding claims, **characterised in that** water or air can be used as the test medium.

5. A drainage system in accordance with one of the preceding claims, **characterised in that** the inspection pipes (30) are poured into the concrete outer pipe (12) such that they each open into the sealed intermediate space between a pipe coupling (16) and a pipe spigot (14) of adjacent drainage pipes (10, 12).

6. A drainage system in accordance with one of the preceding claims, **characterised in that** the coupling (16) of a drainage pipe (10, 12) is also lined with a plastic layer.

## Revendications

1. Système de canal comprenant au moins deux conduites, qui sont reliées par au moins un tuyau de canalisation (10, 12) à double paroi et double étanchéification, qui peut être introduit dans des manchons de conduite formés sur les conduites, de sorte qu'entre les manchons de conduite et le tuyau de canalisation (10, 12) à double paroi, un espace d'étanchéité commun se forme entre les joints d'étanchéité doubles (22, 28), le tuyau de canalisation (10, 12) comportant un tuyau intérieur en matière plastique (10) et un tuyau extérieur en béton (12),
**caractérisé en ce que**
dans le tuyau de canalisation (10, 12) à double paroi est intégré un tuyau d'essai (30) le suivant sur sa longueur, qui forme l'espace d'étanchéité dans la zone du tuyau de canalisation (10, 12) respectif et **en ce que** le tuyau d'essai (30) s'étend hors du tuyau intérieur en matière plastique (10) le long de celui-ci.

2. Système de canal selon l'une des revendications précédentes, **caractérisé en ce qu'**un essai d'étanchéité peut être effectué au moyen d'un dispositif de contrôle en utilisant un fluide d'essai.

3. Système de canal selon l'une des revendications précédentes, **caractérisé en ce que** le dispositif de contrôle comporte un raccordement pour un fluide d'essai, un premier moyen de sectionnement, un dispositif de mesure avec indicateur, un second moyen de sectionnement ainsi qu'une pièce de raccordement pour le raccordement au moyen de liaison de la conduite.

4. Système de canal selon l'une des revendications précédentes, **caractérisé en ce que** de l'eau ou de l'air peut être utilisé comme fluide d'essai.

5. Système de canal selon l'une des revendications précédentes, **caractérisé en ce que** les tuyaux d'essai (30) sont coulés dans le tuyau extérieur en béton (12) de telle manière qu'ils débouchent respectivement dans l'espace intermédiaire étanchéifié entre un manchon de tuyau (16) et un bout mâle de tuyau (14) de tuyaux de canalisation (10, 12) adjacents.

6. Système de canal selon l'une des revendications précédentes, **caractérisé en ce que** le manchon (16) d'un tuyau de canalisation (10, 12) est également revêtu d'une couche de matière plastique.
